# DEMANDE DE BREVET EUROPEEN

(11) **EP 2 039 598 A2**
(43) Date de publication de la demande: **25.03.2009**
(21) Numéro de dépôt: 08164622.6
(22) Date de dépôt: 18.09.2008
(51) Int. Cl.: B62H 3/00, B62H 5/20, G07F 7/00

(54) **Procédé et système de stockage de cycles**

(30) Priorité: 20.09.2007 FR 0757739
(71) Demandeur: JCDecaux SA, 92200 Neuilly-sur-Seine (FR)
(72) Inventeur: Le Gars, Jacques, 78950, GAMBAIS (FR)
(74) Mandataire: Cabinet Plasseraud

(57) **Abrégé**

Procédé comprenant une étape de remisage au cours de laquelle le poste de verrouillage (7) détecte une arrivée d'un cycle (1) à un poste de verrouillage (7) et un verrouillage de ce cycle (1). L'étape de remisage comporte une sous-étape de signalisation de défaut de verrouillage au cours de laquelle un signal sonore est émis lorsque l'arrivée d'un cycle (1) à un poste de verrouillage (7) est détectée sans que le verrouillage du cycle (1) ne soit détecté, le signal sonore étant interrompu dès que le verrouillage du cycle (1) est détecté.

Système automatique de stockage de cycles comprenant un poste de verrouillage (7) auquel peut se verrouiller un cycle (1), un dispositif de commande (2) adapté pour détecter une arrivée et un verrouillage du cycle (1) et un dispositif de signalisation sonore adapté pour émettre un signal sonore lorsque l'arrivée d'un cycle (1) est détectée sans que le verrouillage du cycle (1) ne soit détecté.

## Description

La présente invention est relative à un procédé et un système automatique de stockage de cycles, destiné notamment à la mise à disposition temporaire de cycles auprès du public.

Par "cycles", on désigne ici des véhicules légers, notamment à deux roues, tels que bicyclettes (éventuellement avec un moteur d'assistance), cyclomoteurs, trottinettes (éventuellement à moteur), scooters, véhicules à deux roues juxtaposées (par exemple, de type "Segway®") etc.

Plus particulièrement, l'invention concerne un procédé de stockage de cycles comprenant une étape de remisage au cours de laquelle le poste de verrouillage détecte une arrivée d'un cycle à un poste de verrouillage et un verrouillage de ce cycle audit poste de verrouillage,

Un tel procédé de stockage de cycles est déjà connu, par exemple par le brevet FR 2 856 825 B1 qui décrit un système automatique de stockage de cycles dans lequel l'étape de remisage consiste à présenter l'organe de verrouillage du cycle dans une gâche prévue à cet effet sur un poste de verrouillage. Le verrouillage a lieu dès lors que l'organe de verrouillage du cycle est complètement inséré dans la gâche. Lorsque l'étape de remisage est terminée, un voyant ou un signal sonore peut informer l'utilisateur du bon verrouillage du cycle.

Lorsque le verrouillage du cycle au poste de verrouillage n'a pas lieu, le signal lumineux ou sonore n'est pas émis, mais l'expérience montre que les utilisateurs ne vérifient pas tous l'émission de ce signal de verrouillage et laissent donc parfois le cycle non verrouillé au poste de verrouillage. Il s'ensuit que la location du cycle continue, entraînant d'une part, une surfacturation de l'utilisateur par rapport à la durée effective de location et d'autre part, un risque de vol du cycle qui n'est pas verrouillé au poste de verrouillage.

La présente invention a pour but de pallier ces inconvénients.

A cet effet, selon l'invention, un procédé de stockage de cycles du genre en question est **caractérisé en ce que** l'étape de remisage comporte une sous-étape de signalisation de défaut de verrouillage au cours de laquelle un signal sonore est émis lorsque l'arrivée d'un cycle à un poste de verrouillage est détectée sans que le verrouillage du cycle audit poste de verrouillage ne soit détecté, le signal sonore étant interrompu dès que le verrouillage du cycle audit poste de verrouillage est détecté.

Par l'introduction d'une telle nuisance sonore qui commence dès la détection d'arrivée du cycle (ou peu de temps après) et se termine dès la détection de bon verrouillage du cycle, l'utilisateur est incité à bien raccrocher son cycle. En effet, l'émission sonore permet de signaler à l'utilisateur que le cycle n'est pas verrouillé et l'utilisateur manipule alors spontanément le cycle pour bien le verrouiller à un poste de verrouillage et ainsi faire cesser la nuisance sonore induite par l'émission sonore.

Dans différents modes de réalisations de l'invention, on peut éventuellement avoir recours, en outre, à l'une et/ou à l'autre des dispositions suivantes :
- l'émission du signal sonore débute un temps déterminé après que le poste de verrouillage ait détecté l'arrivée du cycle,
- l'émission du signal sonore s'arrête automatiquement au-delà d'une durée déterminée à compter de son déclenchement,
- un premier signal lumineux est émis au cours de l'étape de remisage d'un cycle,
- si le verrouillage du cycle n'est pas détecté au-delà d'une durée déterminée après que l'arrivée d'un cycle ait été détectée, l'émission du premier signal lumineux s'arrête et un deuxième signal lumineux est émis,
- l'émission du deuxième signal lumineux s'arrête au-delà d'une durée déterminée et un troisième signal lumineux est émis,
- les signaux lumineux sont distincts.

L'invention concerne aussi un système automatique de stockage de cycles comprenant :
- une pluralité de cycles portant chacun un organe de verrouillage,
- au moins un poste de verrouillage auquel peut se verrouiller un cycle au moyen dudit organe de verrouillage,
- un dispositif de commande adapté pour détecter une arrivée et un verrouillage du cycle au dispositif de verrouillage d'un poste de verrouillage, et
- un dispositif de signalisation sonore relié au dispositif de commande,
**caractérisé en ce que** le dispositif de signalisation sonore est adapté pour émettre un signal sonore lorsque l'arrivée d'un cycle à un poste de verrouillage est détectée sans que le verrouillage du cycle audit poste de verrouillage ne soit détecté, le signal sonore étant interrompu dès que le verrouillage du cycle audit poste de verrouillage est détecté.

Le système automatique de stockage de cycles de l'invention peut aussi comporter l'une et/ou l'autre des dispositions suivantes :
- chacun des cycles comporte un circuit électronique adapté pour communiquer avec le dispositif de commande lorsque le cycle est arrivé au poste de verrouillage, le dispositif de commande étant adapté pour détecter l'arrivée du cycle au poste de verrouillage par l'établissement d'une communication avec ledit circuit électronique,
- un dispositif de signalisation lumineux adapté pour émettre un premier signal lumineux entre le moment où l'arrivée d'un cycle est détectée et le moment où le verrouillage du cycle est détecté,
- le dispositif de signalisation lumineux est adapté pour stopper l'émission du premier signal lumineux si le verrouillage du cycle n'est pas détecté au-delà d'une durée déterminée après que l'arrivée d'un cycle ait été détectée, et pour émettre un deuxième signal lumineux,
- le dispositif de signalisation lumineux est adapté pour stopper l'émission du deuxième signal lumineux au-delà d'une durée déterminée et pour émettre un troisième signal lumineux.

D'autres caractéristiques et avantages de l'invention apparaîtront au cours de la description suivante d'un mode de réalisation donné à titre d'exemple non limitatif, en regard des dessins joints.

La description se réfère aux dessins annexés sur lesquels :
- la figure 1 représente une vue schématique en perspective d'un système automatique de stockage de cycles selon l'invention,
- la figure 2 est une vue de détail en perspective d'un cycle et d'un poste de verrouillage,
- la figure 3 est un schéma bloc du système de stockage de cycles, et
- la figure 4 est un logigramme du procédé de stockage selon l'invention.

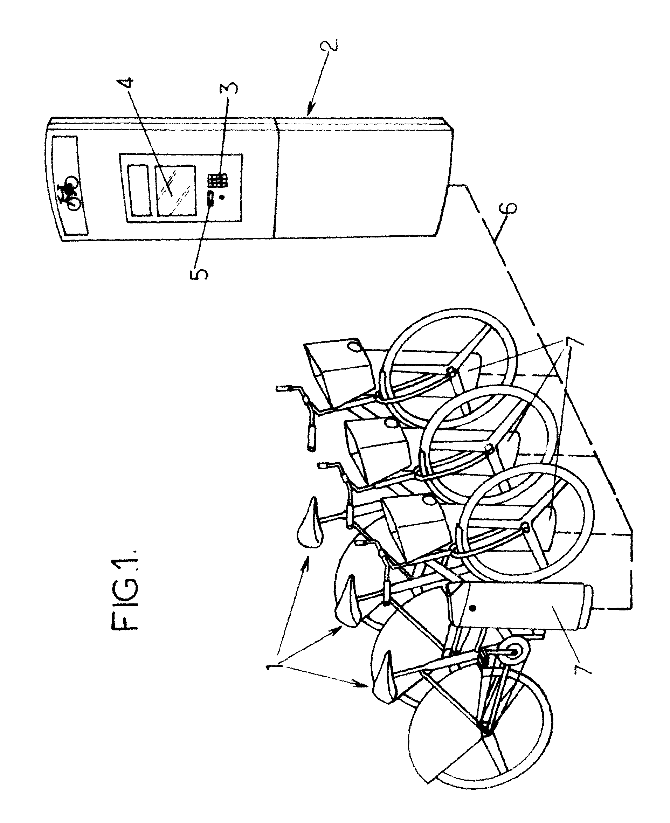

La figure 1 illustre de manière schématique un système automatique de stockage de cycles 1, tel que notamment des bicyclettes, permettant par exemple de stocker des cycles sur la voie publique de façon à les mettre à disposition du public, en particulier à l'aide d'un système de location.

Ce système automatique de stockage de cycles comporte, pour chaque aire de stockage de cycles, un dispositif de commande telle qu'une borne interactive 2 dotée d'une interface utilisateur comprenant, par exemple un clavier 3, un écran 4 et un lecteur de carte portative électronique 5. Cette borne interactive peut, le cas échéant, communiquer avec un serveur central qui communique lui-même avec d'autres bornes interactives 2 similaires situées sur d'autres aires de stockage de cycles.

Une aire de stockage de cycles telle qu'illustrée sur la figure 1 comprend, par exemple une pluralité de postes de verrouillage 7 disposée au voisinage de la borne interactive 2 pour recevoir des cycles 1 lorsqu'ils sont inutilisés.

De manière connue, la borne interactive 2 peut être reliée, par exemple par liaisons filaires enterrées 6 aux postes de verrouillage 7 qui peuvent, par exemple se présenter sous la forme de bornes de verrouillage fixées au sol sur la voie publique.

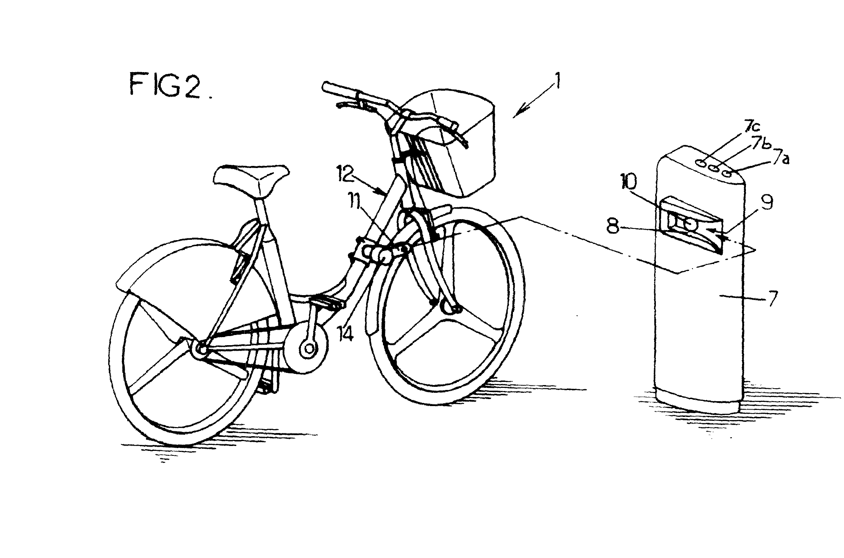

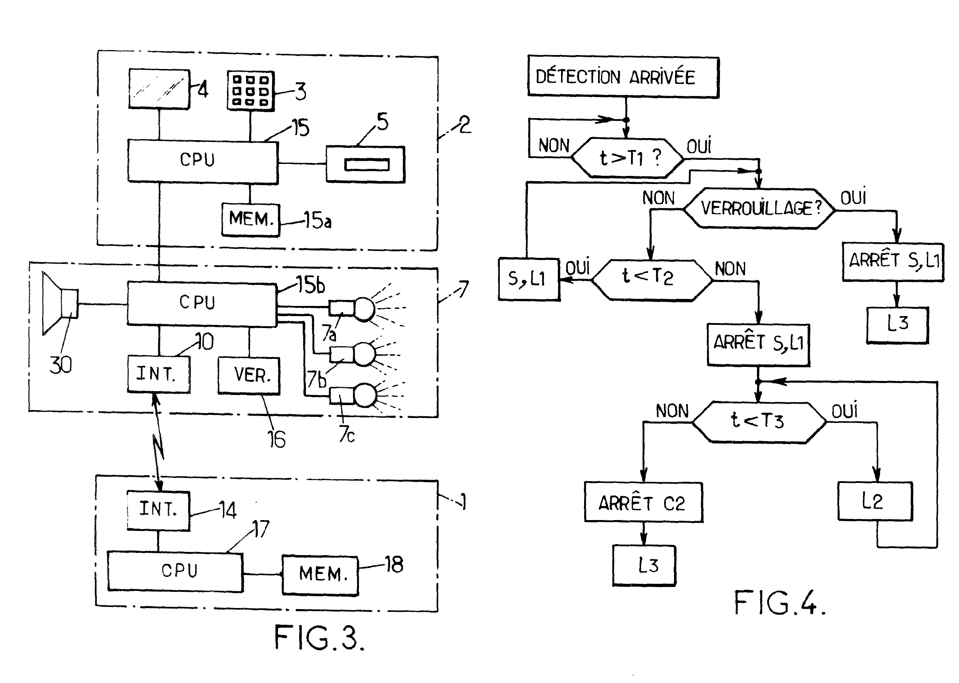

Tel que mieux illustré sur les figures 2 et 3, chaque poste de verrouillage 7 comporte une gâche 8 formant un boîtier doté d'une ouverture échancrée 9 et comporte en outre, par exemple une interface de communication 10 (INT) servant de dispositif de lecture pour identifier les cycles 1.

Chaque cycle 1 comporte, quant à lui, un organe de verrouillage 11 solidaire du cadre 12 du cycle et disposé de façon à pouvoir s'engager dans la fente 9 de la gâche 8. L'organe de verrouillage 11 peut être pourvu d'une interface de communication 14 (INT) servant de dispositif d'identification du cycle 1 pour communiquer à courte portée (quelques centimètres) avec l'interface de communication 10 de la gâche 8 sans contact physique, par exemple par induction ou par radio.

Comme illustré schématiquement sur la figure 3, la borne interactive 2 peut comporter une unité centrale électronique 15 (CPU), tel qu'un microprocesseur, microcontrôleur ou autre, relié au clavier 3, à l'écran 4, au lecteur de carte 5, à une mémoire 15a (MEM) et à une unité centrale électronique 15b (CPU) de chaque poste de verrouillage 7.

L'unité centrale électronique 15b de chaque poste de verrouillage 7 peut être reliée de manière connue à l'interface 10 (INT) précitée et à un dispositif de verrouillage 16 (VER.) qui peut être mécanique ou électrique, comme par exemple, celui décrit dans le document FR 2 856 825.

L'unité centrale électronique 15b de chaque poste de verrouillage 7 est, par ailleurs, reliée à un dispositif de signalisation sonore 30 et à un dispositif de signal lumineux comprenant des diodes électroluminescentes ou autre dispositif de signalisation lumineux. En l'espèce, le dispositif de signal lumineux comprend par exemple trois diodes électroluminescentes 7a, 7b et 7c pouvant chacune émettre une couleur différente.

Par ailleurs, chaque cycle 1 comporte un circuit électronique de commande 17 (CPU) formé, par exemple par un microprocesseur, un microcontrôleur ou similaire, qui est relié à l'interface 14 précitée (INT) et à une mémoire 18 (MEM.).

Le système de stockage automatique de cycle qui vient d'être décrit peut fonctionner, par exemple comme suit.

Lorsqu'un utilisateur veut emprunter un cycle 1 verrouillé sur l'un des postes de verrouillage 7, il lui suffit de s'identifier de manière connue auprès de la borne interactive 2 ou le cas échéant directement auprès d'un poste de verrouillage 7 présentant un cycle 1 disponible.

A titre d'exemple, pour s'identifier auprès de la borne interactive 2, l'utilisateur peut par exemple insérer une carte électronique portative dans le lecteur 5 de la borne interactive 2, puis entrer un code secret au moyen du clavier 3 ou utiliser tout autre moyen de paiement ou d'abonnement qui lui permet de s'identifier afin de choisir l'un des cycles 1 disponibles. Dès que l'identification de l'utilisateur est effectuée et la location de cycle autorisée, la borne interactive 2 envoie un signal d'autorisation de déverrouillage à l'unité centrale 15b du poste de verrouillage 7 correspondant au cycle 1 choisi par l'utilisateur. Le signal d'autorisation peut, en outre, comprendre un identifiant de l'utilisateur qui est transmis au circuit électronique de commande 7 du cycle et qui est stocké dans la mémoire 18 du cycle.

L'interface de communication 10 du poste de verrouillage 7 repère alors l'enlèvement du cycle 1 et informe l'unité centrale électronique 15b qui remet ensuite le dispositif de verrouillage 16 en position de verrouillage pour recevoir un nouveau cycle.

Lorsqu'un utilisateur souhaite remiser le cycle 1 emprunté, il le verrouille sur un poste de verrouillage 7.

A cet effet, il engage l'organe de verrouillage 11 du cycle dans la gâche 8 du poste de verrouillage 7.

A ce moment, une communication entre les interfaces 10 et 14 est établie permettant alors un dialogue entre l'unité centrale électronique 15b du poste de verrouillage 7 et le circuit électronique de commande 17 du cycle. L'arrivée du cycle 1 au poste de verrouillage 7 est ainsi détectée par l'établissement de cette communication.

En référence à la figure 4, pendant cette étape de remisage qui débute au moment où l'unité centrale électronique 15b a détecté l'arrivée d'un cycle, le dispositif de signalisation sonore 30 peut émettre un signal sonore de défaut S informant l'utilisateur que le verrouillage n'a pas encore lieu. Dès que l'unité centrale électronique 15b détecte le verrouillage effectif du cycle 1 au poste de verrouillage 7 (en détectant l'état du système de verrouillage interne à la gâche 8), l'émission du signal sonore de défaut S s'arrête.

En l'espèce, lors d'une restitution normale, le dispositif de signalisation sonore 30 émet typiquement un signal sonore S sous forme de un à deux bips (le temps du remisage), signalant le bon verrouillage mécanique du cycle 1 sur le poste de verrouillage 7.

L'émission du signal sonore S peut débuter dès la détection de l'arrivée du cycle ou un temps déterminé T1 après que le poste de verrouillage 7 a détecté l'arrivée du cycle, en l'espèce, après que l'unité centrale électronique 15b ait été informé de la détection de l'arrivée du cycle 1. Ce temps T1 peut être de l'ordre de quelques secondes, par exemple autour de 2 secondes après la détection de l'arrivée du cycle.

Dès que le cycle est verrouillé à un poste de verrouillage 7, l'étape de remisage est terminée, l'émission du signal sonore de défaut S est stoppée et l'unité centrale électronique 15b informe la borne interactive 2 du bon verrouillage du cycle 1 sur le poste de verrouillage 7. L'identifiant utilisateur contenu dans la mémoire 18 du cycle 1 est alors transmis à la borne interactive 2 qui sait ainsi quel utilisateur a rendu son cycle et termine la location du cycle. La borne interactive 2 informe alors l'unité centrale électronique 15b que le cycle est à nouveau disponible pour la location.

Si le cycle n'est que partiellement raccroché (engagé sur le poste de verrouillage 7, mais non verrouillé), par exemple parce que l'organe de verrouillage 11 est introduit de biais dans le dispositif de verrouillage 9 ou pour toute autre raison mécanique et/ou électronique, l'étape de verrouillage n'a pas lieu et l'étape de remisage n'aboutit pas. Dans ce cas, le signal sonore de défaut S continue d'être émis. Dès lors, l'utilisateur manipule spontanément le cycle pour essayer de l'engager complètement. Dès que le verrouillage est détecté par le poste de verrouillage 7 et l'unité centrale électronique 15b, l'émission sonore est instantanément stoppée.

Dans le cas où l'utilisateur n'arrive pas à engager complètement l'organe de verrouillage 11 dans le dispositif de verrouillage 9 malgré ses tentatives, par exemple en cas de détérioration mécanique et/ou de dysfonctionnement électronique, l'émission du signal sonore S s'arrête automatiquement au-delà d'une durée déterminée T2 paramétrable. A titre d'exemple, la durée déterminée T2 peut être de l'ordre de 30 secondes, mais pourrait être prévue jusqu'à 1 minute ou 2 minutes.

Pendant toute l'étape de remisage, le dispositif de signal lumineux peut être activé. En l'espèce, un premier signal lumineux L1 (par exemple orange) peut être émis par une première diode électroluminescente 7a pour signaler à l'utilisateur que l'arrivée de son cycle a bien été détecté, mais que le verrouillage n'a pas encore eu lieu. Cette première émission lumineuse L1 peut intervenir pendant la même durée T1 précitée.

Lors d'un mauvais raccrochage du cycle, l'utilisateur subit, comme décrit précédemment, la nuisance sonore qui peut être accompagnée de l'émission du premier signal lumineux L1 (orange). Si le problème de mauvais raccrochage persiste au-delà d'un temps T supérieur à T2, l'émission sonore s'arrête. Cet arrêt peut être accompagné de l'arrêt de l'émission du premier signal lumineux L1 (orange) et de l'émission d'un deuxième signal lumineux L2 (rouge), afin de signaler visuellement le non verrouillage. A cet effet, le dispositif de commande, en l'espèce l'unité centrale électronique 15b commande l'extinction de la première diode électroluminescente 7a et la mise en marche d'une deuxième diode électroluminescente 7b émettant le deuxième signal lumineux L2 (rouge).

Toutefois, afin de ne pas attirer l'attention d'éventuels resquilleurs qui verraient le deuxième signal lumineux L2 (rouge) émis et sauraient que le cycle n'est pas verrouillé au poste de verrouillage, il peut être prévu que l'émission de ce deuxième signal lumineux L2 (rouge) s'arrête au-delà d'une durée déterminée T3, par exemple de l'ordre de 15 secondes et qu'un troisième signal lumineux L3 (par exemple vert) soit émis. A cet effet, l'unité centrale électronique 15b commande l'extinction de la deuxième diode électroluminescente 7b (rouge) et la mise en marche d'une troisième diode électroluminescente 7c émettant le deuxième signal lumineux L3 (vert).

L'unité centrale électronique 15b n'aura bien entendu pas détecté le verrouillage du cycle et transmettra une information à la borne interactive 2 pour qu'une intervention de maintenance arrive au plus vite pour résoudre définitivement le problème de verrouillage du cycle. En outre, il peut éventuellement être prévu que la fin de location soit prise en compte pour l'utilisateur afin qu'il ne lui soit pas prélevé un montant supérieur à la location effective du cycle.

Lorsque l'étape de remisage s'effectue sans difficulté et que le cycle est verrouillé rapidement, l'unité centrale électronique 15b commande l'extinction de la première diode électroluminescente 7a (orange) et directement la mise en marche de la troisième diode électroluminescente 7c émettant le troisième signal lumineux L3 (vert). L'unité centrale électronique 15b est pendant le même temps informée du bon verrouillage du cycle remisé et peut en permettre la nouvelle location.

## Revendications

1. Procédé de stockage de cycles comprenant une étape de remisage au cours de laquelle le poste de verrouillage (7) détecte une arrivée d'un cycle (1) à un poste de verrouillage (7) et un verrouillage de ce cycle (1) audit poste de verrouillage (7),
**caractérisé en ce que** la détection de l'arrivée d'un cycle (1) à un poste de verrouillage (7) est séparée de la détection d'un verrouillage de ce cycle (1) audit poste de verrouillage (7) par des moyens différents,
**en ce que** l'étape de remisage comporte une sous-étape de signalisation de défaut de verrouillage au cours de laquelle un signal sonore (S) est émis lorsque l'arrivée d'un cycle (1) à un poste de verrouillage (7) est détectée sans que le verrouillage du cycle (1) audit poste de verrouillage (7) ne soit détecté, le signal sonore (S) étant interrompu dès que le verrouillage du cycle (1) audit poste de verrouillage (7) est détecté, et
**en ce que** l'émission du signal sonore (S) débute un temps déterminé (T1) après que le poste de verrouillage (7) ait détecté l'arrivée du cycle (1).

2. Procédé de stockage de cycles selon la revendication 1, dans lequel l'émission du signal sonore (S) s'arrête automatiquement au-delà d'une durée déterminée (T2) à compter de son déclenchement.

3. Procédé de stockage de cycles selon la revendication 1 ou 2, dans lequel l'arrivée d'un cycle (1) à un poste de verrouillage (7) est détectée par l'établissement d'une communication entre le cycle (1) et le poste de verrouillage (7).

4. Procédé de stockage de cycles selon la revendication précédente, dans lequel la communication entre le cycle (1) et le poste de verrouillage (7) est une communication à courte portée sans contact physique.

5. Procédé de stockage de cycles selon l'une quelconque des revendications précédentes, dans lequel le verrouillage d'un cycle (1) à un poste de verrouillage (7) est détecté en détectant l'état du poste de verrouillage (7).

6. Procédé de stockage de cycles selon l'une quelconque des revendications précédentes, dans lequel un premier signal lumineux (L1) est émis au cours de l'étape de remisage d'un cycle (1).

7. Procédé de stockage de cycles selon la revendication précédente, dans lequel, si le verrouillage du cycle (1) n'est pas détecté au-delà d'une durée déterminée (T2) après que l'arrivée d'un cycle (1) ait été détectée, l'émission du premier signal lumineux (L1) s'arrête et un deuxième signal lumineux (L2) est émis.

8. Procédé de stockage de cycles selon la revendication précédente, dans lequel l'émission du deuxième signal lumineux (L2) s'arrête au-delà d'une durée déterminée (T3) et un troisième signal lumineux (L3) est émis.

9. Procédé de stockage de cycles selon la revendication 4 ou 5, dans lequel les signaux lumineux (L1, L2, L3) sont distincts.

10. Système automatique de stockage de cycles comprenant :
- une pluralité de cycles (1) portant chacun un organe de verrouillage (11),
- au moins un poste de verrouillage (7) auquel peut se verrouiller un cycle (1) au moyen dudit organe de verrouillage (11),
- un dispositif de commande (2) adapté pour détecter une arrivée et un verrouillage du cycle (1) au dispositif de verrouillage (9) d'un poste de verrouillage (7), et
- un dispositif de signalisation sonore (30) relié au dispositif de commande,
**caractérisé en ce que** la détection de l'arrivée d'un cycle (1) à un poste de verrouillage (7) est séparée de la détection d'un verrouillage de ce cycle (1) audit poste de verrouillage (7) par des moyens différents,
**en ce que** le dispositif de signalisation sonore (30) est adapté pour émettre un signal sonore (S) lorsque l'arrivée d'un cycle (1) à un poste de verrouillage (7) est détectée sans que le verrouillage du cycle (1) audit poste de verrouillage (7) ne soit détecté, le signal sonore (S) étant interrompu dès que le verrouillage du cycle (1) audit poste de verrouillage (7) est détecté, et
**en ce que** le dispositif de signalisation sonore (30) est adapté pour que l'émission du signal sonore (S) débute un temps déterminé (T1) après que le poste de verrouillage (7) ait détecté l'arrivée du cycle (1).

11. Système automatique de stockage de cycles selon la revendication précédente, dans lequel chacun des cycles (1) comporte un circuit électronique (17) adapté pour communiquer avec le dispositif de commande (2) lorsque le cycle (1) est arrivé au poste de verrouillage (7), le dispositif de commande (2) étant adapté pour détecter l'arrivée du cycle (1) au poste de verrouillage (7) par l'établissement d'une communication avec ledit circuit électronique (17).

12. Système automatique de stockage de cycles selon la revendication précédente, dans lequel la communication entre le cycle (1) et le poste de verrouillage (7) est une communication à courte portée sans contact physique.

13. Système automatique de stockage de cycles selon l'une quelconque des revendications 10 à 12, comprenant en outre un dispositif de signalisation lumineux (7a, 7b, 7c) adapté pour émettre un premier signal lumineux (L1) entre le moment où l'arrivée d'un cycle (1) est détectée et le moment où le verrouillage du cycle (1) est détecté.

14. Système automatique de stockage de cycles selon la revendication précédente, dans lequel le dispositif de signalisation lumineux (7a, 7b, 7c) est adapté pour stopper l'émission du premier signal lumineux (L1) si le verrouillage du cycle (1) n'est pas détecté au-delà d'une durée déterminée (T2) après que l'arrivée d'un cycle (1) ait été détectée, et pour émettre un deuxième signal lumineux (L2).

15. Système automatique de stockage de cycles selon la revendication précédente, dans lequel le dispositif de signalisation lumineux (7a, 7b, 7c) est adapté pour stopper l'émission du deuxième signal lumineux (L2) au-delà d'une durée déterminée (T3) et pour émettre un troisième signal lumineux (L3).
